# EUROPÄISCHE PATENTANMELDUNG

(11) **EP 2 284 492 A2**
(43) Veröffentlichungstag der Anmeldung: **16.02.2011**
(21) Anmeldenummer: 10171190.1
(22) Anmeldetag: 29.07.2010
(51) Int. Cl.: G01C 21/36

(54) **Verfahren zum Betrieb eines Navigationssystems**

(30) Priorität: 14.08.2009 DE 102009037365; 21.07.2010 DE 102010031859
(71) Anmelder: Navigon AG, 20251 Hamburg (DE)
(72) Erfinder: Mellert, Christian, 97209, Veitshöchheim (DE)
(74) Vertreter: von den Steinen, Axel

(57) **Zusammenfassung**

Die Erfindung betrifft ein Verfahren zum Betrieb eines Navigationssystems mit einer Routenberechnungseinheit und einer Aufnahmeeinrichtung, an der eine akustische Adresseingabe, die aus mehreren Adressbestandteilen besteht, aufgenommen werden kann, wobei die Eingabebestandteile der Adresse mit einem Spracherkennungsmodul analysiert werden, und wobei abhängig vom Ergebnis der Spracherkennungsanalyse zumindest ein geographischer Ort, der durch eine Adresse mit mehreren Adressbestandteilen definiert ist, aus einer Datenbank zur Weiterverarbeitung ausgewählt wird.

## Beschreibung

Die Erfindung betrifft ein Verfahren zum Betrieb eines Navigationssystems nach dem Oberbegriff des Anspruchs 1.

Bekannte Navigationssysteme sind mit Spracherkennungssoftware ausgestattet, um es dem Benutzer zu ermöglichen, bestimmte Eingaben, insbesondere die Eingabe von Adressen, auf akustische Weise vorzunehmen. Dies bedeutet mit anderen Worten, dass bei diesen Navigationssystemen mit Spracherkennungssystem Adressen, wie beispielsweise die Adresse eines Zielpunkts einer zu berechnenden Route, nicht mehr an einer Tastatur oder an einem Touch-Screen alpha-numerisch eingegeben werden müssen, sondern dass die verschiedenen Eingabebestandteile der Adresse in eine Aufnahmeeinrichtung, insbesondere ein Mikrophon, eingesprochen werden. Durch Sprachanalyse mittels eines Spracherkennungsmoduls können diese akustischen Eingaben dann analysiert und einem in einer Datenbank gespeicherten geographischen Ort, der durch eine Adresse mit den entsprechenden Adressbestandteilen definiert ist, zugeordnet werden. Dieser geographische Ort wird dann aus der Datenbank ausgewählt und zur Weiterverarbeitung, beispielsweise zur Routenplanung, benutzt.

Bei der sprachgesteuerten Adresserkennung bekannter Navigationssysteme kann die Adresseingabe ohne zwischenzeitliche Korrekturen der einzelnen Eingabebestandteile unmittelbar nacheinander eingegeben werden. Bei gattungsgemäßen Navigationssystemen sind Ausführungsformen bekannt, in denen die akustische Eingabe einer Adresse lediglich von Anweisungsausgaben, wie beispielsweise "die Stadt bitte" oder "die Straße bitte", unterbrochen wird. An die Eingabe der einzelnen Eingabebestandteile schließt sich eine Spracherkennungsanalyse an, mittels deren Ergebnis mehrere mögliche Adressbestandteile zu dem jeweiligen Eingabebestandteil ausgewählt und mit einem Übereinstimmungswert zur Qualifizierung der akustischen Übereinstimmung mit dem Eingabebestandteil versehen werden. Anschließend werden in bekannten Navigationssystemen für verschiedene Kombinationen der ausgewählten Adressbestandteile die jeweiligen Übereinstimmungswerte statisch mit einem Adressbestanteiltypfaktor gewichtet und kombiniert, was einer Kombinationsbewertung der jeweiligen Kombination von Adressbestandteilen entspricht. Daraus wird anschließend abgeleitet, welche Kombination der alternativen Adressbestandteile insgesamt die höchste Übereinstimmung mit den Eingabebestandteilen vermuten lässt, also die beste Kombinationsbewertung erhält, und somit mit einer hohen Wahrscheinlichkeit der vom Benutzer eingegebenen Adresse entspricht.

Nachteilig an diesem bekannten Verfahren zur Adresserkennung der Spracheingabe ist, dass die Übereinstimmungswerte für jede akustische Eingabe mit mehreren Eingabebestandteilen statisch ermittelt werden. Dabei wird vernachlässigt, dass unterschiedliche Eingabebestandteile bei der Spracherkennungsanalyse unterschiedlich einfach bzw. schwer dem tatsächlich eingegebenen bzw. aufgenommenen Adressbestandteil zugeordnet werden können. Infolge dessen werden Kombinationen aus Adressbestandteilen bei der Erstellung der Kombinationsbewertung nicht dahingehend unterschieden, ob für einen der Eingabebestandteile eine höhere Wahrscheinlichkeit besteht, die korrekte Entsprechung als Ergebnis der Spracherkennungsanalyse aus der Datenbank der Adressbestandteile zu erhalten. Daraus folgt, dass bei einer akustischen Adresseingabe ohne zwischengeschaltete Korrekturmöglichkeit der einzelnen Eingabebestandteile nur mit mäßiger Wahrscheinlichkeit die vom Benutzer eingegebene Adresse korrekt vom Navigationssystem erkannt wird.

Ausgehend von diesem Stand der Technik ist es Aufgabe der vorliegenden Erfindung, ein neues Verfahren zum Betrieb eines Navigationssystems vorzuschlagen, welches bei der akustischen Adresseingabe von Adressen mit mehreren Eingabebestandteilen ohne zwischengeschaltete Korrektur der Eingabebestandteile die Wahrscheinlichkeit der korrekten Identifizierung der einzugebenden Adresse erhöht.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass die Bestimmung der Übereinstimmung eines Eingabebestandteils mit einem Adressbestandteil einer Gewichtung unterliegt, und Kombinationen aus Adressbestandteilen durch die Gewichtung verstärkt der vom Benutzer eingegebenen Adresskombination entsprechen. Dazu wird zunächst bei der akustischen Eingabe eines Eingabebestandteils eine Spracherkennungsanalyse durchgeführt, wobei abhängig von deren Ergebnis zum jeweiligen Eingabebestandteil mehrere mögliche Adressbestandteile aus einer Datenbank ausgewählt werden. Zu jedem alternativen Adressbestandteil wird außerdem ein Übereinstimungswert zur Quantifizierung der akustischen Übereinstimmung mit dem entsprechenden Eingabebestandteil ermittelt. Dieser Übereinstimmungswert charakterisiert also die Wahrscheinlichkeit, mit der der jeweilige Adressbestandteil dem vom Nutzer akustisch eingegebenen Eingabebestandteil der Adresse entspricht.

Nachdem für zumindest zwei Eingabebestandteile eine Spracherkennungsanalyse, eine Auswahl alternativer Adressbestandteile und die Ermittlung der jeweiligen akustischen Übereinstimmungswerte durchgeführt wurde, werden für jeden Eingabebestandteil Gewichtungsfaktoren ermittelt und mit den Übereinstimmungswerten der bei der Sprachanalyse ermittelten ersten bzw. zweiten alternativen Adressbestandteilen verknüpft. Anschließend werden unterschiedliche Kombinationen aus den ersten und zweiten Adressbestandteilen gebildet und jeder dieser Kombinationen eine gewichtete Kombinationsbewertung zugeordnet. Diese gewichtete Kombinationsbewertung beruht dabei auf den, den Adressbestandteilen jeweils zugeordneten, anhand der ermittelten Gewichtungsfaktoren gewichteten Übereinstimmungswerten.

Durch diese neuartige Kombinationsbewertung gelingt es, die Erkennungsrate von akustischen Benutzereingaben, insbesondere die akustische Adresseingabe, deutlich zu erhöhen. Infolge dessen werden auch die Interaktionen für die Eingabe einer Adresse deutlich verringert, da kaum noch Benutzerinteraktionen zur Korrektur der Adresseingabe notwendig sind. Schließlich führt dies zu einer erhöhten Verkehrssicherheit, da sich der Benutzer eines mit dem erfindungsgemäßen Verfahren betriebenen Navigationssystems insbesondere während akustischen Eingabevorgängen fast uneingeschränkt auf das Verkehrsgeschehen konzentrieren kann, ohne dabei auf eine komfortable Bedienung des Navigationssystems zu verzichten.

Zur Definition der Gewichtungsfaktoren sind grundsätzlich unterschiedliche Ansätze denkbar. Als Grundlage der Definition der Gewichtungsfaktoren ist es aber sinnvoll, dass diese ein Maß dafür darstellen, ob der Eingabebestandteil von der Spracherkennungsanalyse korrekt erkannt werden kann. Dadurch wird ermöglicht, dass bei einem Eingabebestandteil, welcher mit hoher Wahrscheinlichkeit erkannt werden kann, die Übereinstimmungswerte ein schwereres Gewicht erhalten und Kombinationen aus Adressbestandteilen bevorzugt werden, die einen solchen schwer gewichteten Adressbestandteil mit hohem Übereinstimmungswert enthalten. Andererseits führt die Untergewichtung von Eingabebestandteilen, die nur in einem geringen Maße sicher identifiziert werden können, dazu, dass vermeintlich richtige Adressbestandteile mit einem hohen Übereinstimmungswert aufgrund der Gewichtung nur geringen Einfluss auf die gewichtete Kombinationsbewertung haben. Mit anderen Worten ausgedrückt dienen die Gewichtungsfaktoren indirekt dazu, die Leistungsfähigkeit der Spracherkennungsanalyse eines Eingabebestandteils zu bewerten.

In den Prozess der Feststellung der Identifizierbarkeit eines Eingabebestandteils können grundsätzlich verschiedene Charakteristika eines Eingabebestandteils einbezogen werden. Jedoch hat sich bei der Feststellung der Identifizierbarkeit eines Eingabebestandteils die Länge des Eingabebestandteils als besonders vorteilhaft erwiesen. Mit zunehmender Länge eines Eingabebestandteils nimmt die Anzahl derjenigen Einheiten zu, die beim Abgleich zwischen Eingabebestandteil und Adressbestandteil verwendet werden. Folglich kann bei einem langen Eingabebestandteil ein deutlich differenzierterer Abgleich mit der Adressbestandteildatenbank durchgeführt werden. Deshalb kann in einer bevorzugten Ausführungsform der vorliegenden Erfindung den bei der Spracherkennungsanalyse eines Eingabebestandteils ausgewählten Adressbestandteilen ein Längenparameter zugewiesen werden. Durch Einbeziehung des Längenparameters in die Bestimmung der Gewichtungsfaktoren kann somit sichergestellt werden, dass die Gewichtungsfaktoren ein Maß für die Identifizierbarkeit der Eingabebestandteile darstellen.

Gemäß einer bevorzugten Verfahrensvariante kann die Bestimmung des Längenparameters von den Spracheinstellungen des Navigationssystems und/oder der Sprache der akustischen Adresseingabe abhängen. Dadurch wird sichergestellt, dass dem Längenparameter in der jeweiligen Sprache verlässliche und zur Erstellung der Gewichtungsfaktoren nutzbare Werte zugewiesen werden. Dies ist insbesondere für Benutzer von Navigationssystemen vorteilhaft, die weite grenzüberschreitende Strecken zurücklegen.

Eine vorteilhafte Definition des Längenparameters sieht vor, dass die Anzahl der Zeichen eines Adressbestandteils als Längenparameter verwendet werden. Dadurch wird eine Ermittlung des Längenparameters ermöglicht, die wenig Rechenleistung des Navigationssystems beansprucht und gleichzeitig die Anforderungen an den Längenparameter sehr gut erfüllt. Der Stadt "Ulm" wird in diesem Fall der Wert 3 als Längenparameter des Adressbestandteils zugewiesen.

Alternativ ist eine vorteilhafte Definition des Längenparameters durch die Zuweisung der Anzahl der Zeichen der phonetischen Transcription eines Adressbestandteils möglich. Der Vorteil dieser Definition ist darin begründet, dass Spracherkennung auf der Basis von Phonemen arbeitet. Da zur Erzeugung der Auswahl der alternativen Adressbestandteile die phonetische Transcription der Adressbestandteile verwendet wird, kann eine Bestimmung der Anzahl der Zeichen der phonetischen Transcription ohne nennenswerten Zusatzaufwand durchgeführt werden. Diese Definition des Längenparameters eignet sich insbesondere für die Sprachen, bei denen für eine Vielzahl der Wörter eine nicht zu vernachlässigende Diskrepanz zwischen der Anzahl der Schriftzeichen und der Anzahl der Phoneme gegeben ist. Dies trifft beispielweise auf Französisch zu.

Die Vorteile des erfindungsgemäßen Verfahrens lassen sich insbesondere dadurch nutzen, dass für unterschiedliche Kombinationen aus jeweils verschiedenen ersten Adressbestandteilen und zweiten Adressbestandteilen jeweils unterschiedliche Gewichtungsfaktoren für den ersten Adressbestandteil und den zweiten Adressbestandteil erstellt werden. Dadurch wird die Gewichtung der Übereinstimmungswerte jeweils für die beiden zu kombinierenden Adressbestandteile individuell durchgeführt. Somit kann ein Höchstmaß an dynamischer Gewichtung der jeweiligen Adressbestandteile sichergestellt werden.

Da diese Variante mit einem gewissen Rechenaufwand verbunden ist, kann sie besonders vorteilhaft in Navigationssystemen mit ausreichender Rechenleistung zum Einsatz kommen.

Alternativ dazu kann pro akustischem Adresseingabevorgang lediglich ein Gewichtungsfaktor für den ersten Adressbestandteil und ein Gewichtungsfaktor für den zweiten Adressbestandteil erstellt werden. Dies bietet sich insbesondere für Navigationssysteme mit geringer Rechenleistung an, da nur zwei Gewichtungsfaktoren bestimmt werden müssen. Trotzdem ist auch damit eine dynamische Gewichtung der Adressbestandteile eines akustischen Eingabevorgangs gewährleistet.

Bei der Verwendung von einem Gewichtungsfaktor pro Adressbestandteil kann die Bestimmung des Längenparameters bzw. des Gewichtungsfaktors direkt auf die Eigenschaften der jeweiligen Eingabebestandteile zurückgeführt werden. Dabei bietet sich an, den Längenparameter als das Zeitintervall zu definieren, welches zur Aufzeichnung des jeweiligen Eingabebestandteils benötigt wird. Besonders bei Navigationssystemen mit hochwertigen Aufnahmeeinrichtungen und/oder weitentwickelten Spracherkennungsmodulen bietet sich diese Definition des Längenparameters an, da eine fortgeschrittene Unterscheidung zwischen tatsächlicher Spracheingabe und Umgebungs- bzw. Störgeräuschen erfolgen kann. Somit ist gewährleistet, dass das Zeitintervall der Aufnahme ein korrektes Maß für den Längenparameter darstellt.

Gemäß einer weiteren Verfahrensvariante, bei der für einen Adresseingabevorgang nur ein Gewichtungsfaktor für den ersten bzw. zweiten Adressbestandteil, unabhängig von der jeweiligen Kombination der alternativen Adressbestandteile erstellt wird, kann die Definition des Gewichtungsfaktors vom Längenparameter des Adressbestandteils mit dem jeweils höchsten Übereinstimmungswert mit dem Eingabebestandteil abhängen. Diese Variante zeichnet sich dadurch aus, dass die Bestimmung der Gewichtungsfaktoren mit äußerst geringem zeitlichen und rechnerischen Aufwand möglich ist.

Eine weitere Möglichkeit zur Ableitung der Gewichtungsfaktoren aus den abhängig vom Ergebnis der Spracherkennungsanalyse ausgewählten Adressbestandteilen besteht darin, den arithmetischen Mittelwert der Längenparameter der alternativen Adressbestandteile mit dem Gewichtungsfaktor des jeweiligen Adressbestandteils zu verknüpfen. Alternativ dazu kann gemäß einer weiteren Verfahrensvariante der Median der Längenparameter der, abhängig vom Ergebnis der Spracherkennungsanalyse ausgewählten, ersten bzw. zweiten Adressbestandteile mit dem Gewichtungsfaktor des jeweiligen Adressbestandteils verknüpft werden. Diese Verknüpfungen bedürfen zwar eines größeren Rechenaufwands, sorgen aber auch dafür, dass den Gewichtungsfaktoren korrekte Werte zugeordnet werden.

In einer weiteren vorteilhaften Ausprägung werden die ermittelten Gewichtungsfaktoren in Abhängigkeit von der Art des Eingabebestandteils mit weiteren Adressbestandteiltypenfaktoren verknüpft. Damit kann je nach Bedeutung des Eingabebestandteils, also insbesondere Straße und/oder Stadt, jeweils einer der Eingabebestandteile gegenüber dem anderen höher gewichtet werden. Das führt dazu, dass insbesondere auch bei sehr kurzen Städtenamen in Verbindung mit einem längeren Straßennamen nicht eine derartige Gewichtungssituation entsteht, in der durch die stärkere Gewichtung des Eingabebestandteils Straße Adresskombinationen als möglich berücksichtigt werden, die den richtigen Straßennamen und einen falschen, kurzen Städtenamen enthalten.

In besonders vorteilhafter Weise wird die Kombination von Adressbestandteilen mit der besten gewichteten Kombinationsbewertung zur Weiterverarbeitung, insbesondere als Zieleingabe für einen Routenberechnungsprozess, ausgewählt. Damit können die Interaktionen bei der Eingabe einer Adresse, insbesondere eines Routenziels, auf eine zusammenhängende Eingabe der Eingabebestandteile und, im besten Fall, auf die Bestätigung der Kombinationen von Adressbestandteilen des Ergebnisses der gewichteten Kombinationsbewertung beschränkt werden. In vielen Situationen des Straßenverkehrs ist dies vorteilhaft, da eine Zieleingabe möglich ist, ohne dass der Blick vom Verkehrsgeschehen abgewendet werden muss oder eine manuelle Eingabe bzw. Korrektureingabe erforderlich ist.

Für eine möglichst effektive akustische Adresseingabe können gemäß einer bevorzugten Ausführungsform auch mehrere Kombinationen von Adressbestandteilen, die die relativ höchsten gewichteten Kombinationsbewertungen aufweisen, in Form einer Liste zur Weiterverarbeitung ausgewählt werden. Der Vorteil dieser Verfahrensvariante liegt darin, dass für den seltenen Fall, in dem die Kombination von Adressbestandteilen mit der höchsten gewichteten Kombinationsbewertung nicht der vom Bediener eingegebenen Adresse entspricht, weitere Adressen mit einer hohen gewichteten Kombinationsbewertung zur Verfügung stehen, ohne dass eine erneute Eingabe durch den Benutzer nötig ist.

Dementsprechend ist es ebenfalls vorteilhaft, wenn eine Liste aus mehreren Kombinationen von Adressbestandteilen, die die relativ höchsten gewichteten Kombinationsbewertungen aufweisen, zur Auswahl einer Adresse für den Benutzer ausgegeben, insbesondere angezeigt, wird. Damit wird der Benutzer in die Lage versetzt im Falle einer nicht korrekten Erkennung der Adresseingabe als Kombination der Adressbestandteile mit der höchsten gewichteten Kombinationsbewertung die gewünschte Eingabeadresse aus denen in der Liste enthaltenen Kombinationen von Adressbestandteilen auszuwählen.

In einer vorteilhaften Verfahrensvariante handelt es sich bei dem ersten bzw. zweiten Adressbestandteil um eine Stadt bzw. eine Straße. Dies sind die gängigsten, zur Eingabe einer Adresse benötigten Eingabestandteile.

Verschiedene Aspekte der Erfindung sind in den Zeichnungen schematisch dargestellt und werden nachfolgend beispielhaft erläutert.

Es zeigen:
- Fig. 1: schematisierte Darstellung einer Anzeigeeinrichtung eines Navigationssystems während einer akustischen Adresseingabe sowie die dazugehörigen Ausgaben des Navigationssystems;
- Fig. 2: schematisierte Darstellung einer Anzeigeeinrichtung eines Navigationssystems nach Abschluss der akustischen Adressein- gabeerkennung mittels dynamisch gewichteter Übereinstim- mungswerte sowie die entsprechenden akustischen Ausgaben des Navigationssystems;
- Fig. 3: schematisierte Darstellung einer Anzeigeeinrichtung eines Navigationssystems nach Abschluss der akustischen Adressein- gabeerkennung mittels dynamisch gewichteter Übereinstim- mungswerte sowie die entsprechenden akustischen Ausgaben des Navigationssystems in einer alternativen Ausführungsform.

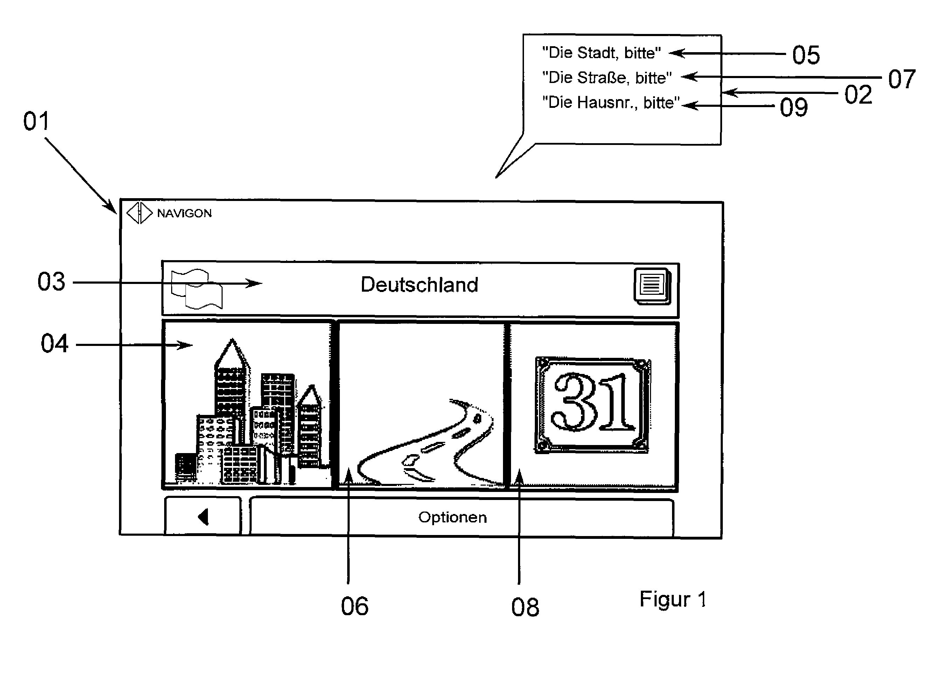

Fig. 1 zeigt eine schematisierte Anzeigeeinrichtung 01 eines Navigationssystems während der akustischen Eingabe einer Adresse sowie die während des Eingabeprozesses vom Navigationssystem ausgegebnen akustischen Signale in Form des Ausgabekastens 02. Zunächst soll im vorliegenden Beispiel davon ausgegangen werden, dass der Benutzer des Navigationssystems in den Grundeinstellungen Deutsch als Interaktionssprache und Deutschland als Zielland für die Adresseingabe festgelegt hat. Letzteres wird durch den Nationsanzeigeinhalt 03 auf der Anzeigeeinrichtung 01 ausgedrückt. Zu Beginn der akustischen Adresseingabe wird der Benutzer aufgefordert, einen ersten Eingabebestandteil akustisch einzugeben. In diesem Fall handelt es sich bei dem ersten Eingabebestandteil um eine Stadt, was dem Benutzer durch den Stadtanzeigeinhalt 04 auf der Anzeigeeinrichtung 01 sowie durch die akustische Ausgabe 05 "die Stadt, bitte" angezeigt wird. Für den Stadtanzeigeinhalt kann als Hinweis bzw. Aufforderung vor und/oder während der akustischen Eingabe des Eingabebestandteils eine grafische Hervorhebung vorgesehen sein. Im vorliegenden Beispiel wird der Benutzer als ersten Eingabebestandteil "Hildesheim" mittels der Aufnahmeeinrichtung aufnehmen.

Nachdem das Spracherkennungsmodul den Abschluss des Eingabevorgangs des ersten Eingabebestandteils registriert, wird der Benutzer durch den Straßenanzeigeinhalt 06, der ebenfalls vor und/oder während der Eingabe grafisch hervorgehoben werden kann, und durch die akustische Ausgabe 07 des Navigationssystems "die Straße, bitte" darauf aufmerksam gemacht, dass als zweiter Eingabebestandteil der akustisch einzugebenden Adresse eine Straße einzugeben ist. Der Benutzer nimmt daraufhin "Turmweg" als zweiten Eingabebestandteil mittels der Aufnahmeeinrichtung auf. In einem letzten Schritt wird der Benutzer durch den Hausnummeranzeigeinhalt 08 auf der Anzeigeeinrichtung 01 sowie durch die akustische Ausgabe 09 "die Hausnummer, bitte" aufgefordert, eine Hausnummer als dritten Eingabebestandteil einzugeben. Der Benutzer nimmt die Zahl 5 als dritten Eingabebestandteil auf.

Im Weiteren wird das erfindungsgemäße Verfahren auf die ersten zwei Eingabebestandeile durchgeführt.

Zur Analyse der Eingabebestandteile muss der akustische Eingabeprozess nicht zwangsläufig abgeschlossen sein. Die nachfolgenden Schritte können also auch bereits während des Eingabevorgangs ablaufen. Zunächst werden zum ersten Eingabebestandteil, hier einer Stadt, eine Spracherkennungsanalyse durchgeführt und mehrere mögliche erste Adressbestandteile aus einer Datenbank ausgewählt, die einen hohen Übereinstimmungswert mit dem Ergebnis der Spracherkennungsanalyse des ersten Eingabebestandteils aufweisen. Im vorliegenden Beispiel werden die in Tabelle 1 dargestellten Adressbestandteile mit dazugehörigem Übereinstimmungswert ausgewählt. In gleicher Weise werden für den zweiten Eingabebestandteil als Ergebnis der Spracherkennungsanalyse diejenigen Adressbestandteile aus der Datenbank ausgewählt, welche einen hohen Übereinstimmungswert mit dem zweiten Eingabebestandteil aufweisen. Diese sind ebenfalls mit ihren jeweiligen Übereinstimmungswerten in der Tabelle 2 aufgelistet.

In einer Vorteilhaften Verfahrensvariante sind die Datenbanken der Adressbestandteile miteinander verknüpft. Es werden daher nur alternative Adressbestandteile zum zweiten Eingabebestandteil ermittelt, die für die jeweils ermittelten alternativen ersten Adressbestandteile zulässig sind. Mit anderen Worten bedeutet dies, dass insbesondere Straßennamen nur aus den in einer Stadt, die als mögliche alternative Stadt ermittelt wurde, vorhandenen Straßennamen ausgewählt werden. Dies verhindert, dass Längenparameter bzw. Gewichtungsfaktoren für Kombinationen berechnet werden, die in Wirklichkeit nicht existieren. Die für das vorliegende Beispiel möglichen Kombinationen sind in der Tabelle 3 wiedergegeben.

Der Längenparameter ist im vorliegenden Beispiel über die Anzahl der Zeichen eines Adressbestandteils definiert. Weiter ist vorgesehen, dass für alle möglichen Kombinationen aus Adressbestandteilen ein gemeinsamer Gewichtungsfaktor für den ersten Adressbestandteil und ein gemeinsamer Gewichtungsfaktor für den zweiten Adressbestandteil ermittelt werden. Schließlich ist im vorliegenden Beispiel die Beziehung zwischen dem Gewichtungsfaktor eines Adressbestandteils und den Längenparametern der alternativen Adressbestandteile dadurch gegeben, dass der Längenparameter des alternativen Adressbestandteils mit dem jeweils höchsten Übereinstimmungswert als relativer Gewichtungsfaktor für alle alternativen Adressbestandteile eines Eingabebestandteils verwendet wird.

In den Tabellen 4 und 5 werden die Verknüpfungen der Längenparameter der Adressbestandteile mit dem Gewichtungsfaktor und die relativen Gewichtungsfaktoren aufgeführt.

Mit diesen Definitionen werden in Tabelle 6 beispielhaft die gewichteten Übereinstimmungswerte für die existierenden Kombinationen von Adressbestandteilen durchgeführt. Dabei wird die Verknüpfung zwischen Gewichtungsfaktor und Übereinstimmungswert als Multiplikation der beiden jeweiligen Werte ausgeführt. Mittels dieser gewichteten Übereinstimmungswerte kann abschließend für jede Kombination aus verschiedenen Adressbestandteilen die gewichtete Kombinationsbewertung ermittelt werden. Diese ist als Summe der gewichteten Übereinstimmungswerte ebenfalls in Tabelle 7 aufgeführt. Wie aus der Tabelle hervorgeht, weist die Kombination der Adressbestandteile "Hildesheim, Turmweg" die höchste gewichtete Kombinationsbewertung auf.

Die Leistung des erfindungsgemäßen Verfahrens wird besonders deutlich, wenn es mit den statischen Gewichtungsverfahren aus dem Stand der Technik verglichen wird. Dabei ist für die statischen Adressbestandteiltypfaktoren beispielsweise vorgesehen, dass eine doppelte Gewichtung des Übereinstimmungswertes für den Adressbestandteil Straße gegenüber einer einfachen Gewichtung des Übereinstimmungswertes des Adressbestandteils Stadt vorgenommen wird. Für die beispielhaften Kombinationen von Adressbestandteilen aus Tabelle 3 und den entsprechenden Übereinstimmungswerten aus Tabelle 1 und Tabelle 2 ist eine bekannte, statische Gewichtung der Übereinstimmungswerte und eine daraus resultierende Kombinationsbewertung in Tabelle 8 enthalten.

Aus Tabelle 8 wird deutlich, dass im vorliegenden Beispiel der korrekten Kombination der Adressbestandteile "Hildesheim, Turmweg" die geringste statisch gewichtete Kombinationsbewertung zugeordnet worden wäre. Das aus dem Stand der Technik bekannte Verfahren mit statischen Gewichtungsfaktoren dient also keineswegs immer zur korrekten Identifizierung einer akustischen Adresseingabe.

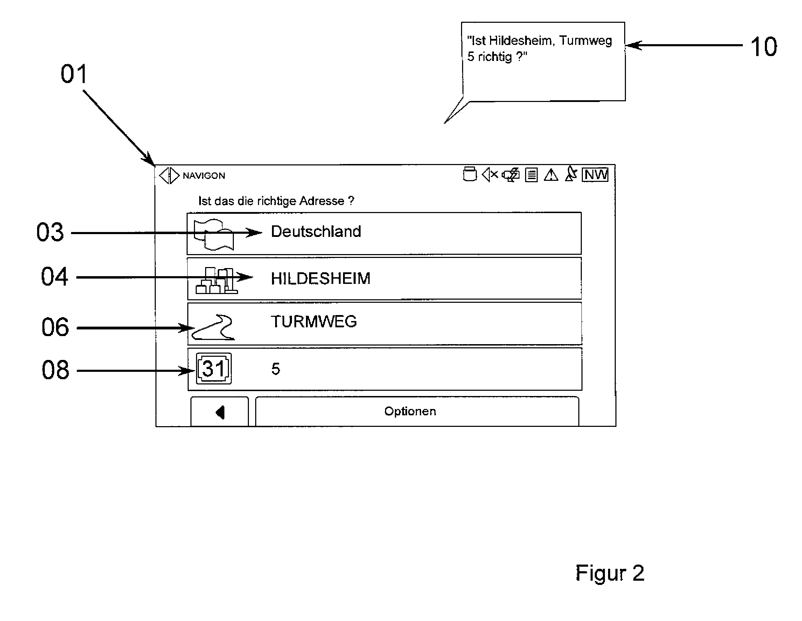

In Fig. 2 ist die Kombination "Hildesheim, Turmweg" als die Kombination von Adressbestandteilen mit der höchsten gewichteten Kombinationsbewertung an die Anzeigeeinrichtung und die akustische Ausgabeeinrichtung des Navigationssystems als Ergebnis des akustischen Eingabevorgangs weitergeleitet worden. Die ermittelten Adressbestandteile werden in den entsprechenden Anzeigeinhalten 03, 04, 06 und 08 auf der Anzeigeeinrichtung 01 dargestellt. Weiter erfolgt die akustische Ausgabe 10 "ist Hildesheim Turmweg 5 richtig?". Der Benutzer hat jetzt die Möglichkeit, durch eine Interaktion das Ergebnis der akustischen Adresseingabe zu bestätigen. Diese Bestätigung kann bevorzugt dazu benutzt werden, einen Routenberechnungsprozess zu der akustisch eingegebenen Adresse auszulösen.

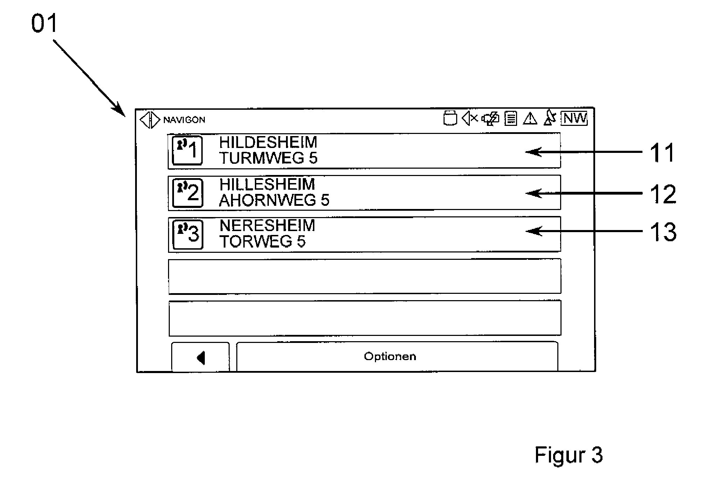

Fig. 3 zeigt die Anzeigeeinrichtung 01 eines Navigationssystems, bei dem nach einer akustischen Adresseingabe anhand des erfindungsgemäßen Verfahrens gewichtete Kombinationsbewertungen für mögliche Kombinationen aus Adressbestandteilen berechnet wurden. In diesem Fall werden auf der Anzeigeeinrichtung 01 in den Adressanzeigeinhalten 11, 12 und 13 die Alternativen, real existierende Adresskombinationen, entsprechend der Ergebnisse der gewichteten Kombinationsbewertung geordnet dargestellt. Es kann in dieser Situation vorgesehen sein, dass der Benutzer mit einer akustischen oder manuellen Interaktion eine der dargestellten Adresskombinationen zur Weiterverarbeitung auswählt.

**Tabelle1:**

| Eingabebestandteil: | Stadt |
|---|---|
| Eingabe: | Hildesheim |
| alternative Adressbestandteile | Übereinstimmungswert |
| Hildesheim | 100 |
| Hillesheim | 95 |
| Nersheim | 81 |

**Tabelle 2:**

| Eingabebestandteil: | Straße |
|---|---|
| Eingabe: | Turmweg |
| alternative Adressbestandteile | Übereinstimmungswert |
| Torweg | 100 |
| Ahornweg | 95 |
| Turmweg | 90 |

**Tabelle 3:**

| Existierende Adressbestandteilskombinationen | |
|---|---|
| Stadt | Straße |
| Hildesheim | Turmweg |
| Hillesheim | Ahornweg |
| Nersheim | Torweg |

**Tabelle 4:**

| Eingabebestandteil: Stadt | | | |
|---|---|---|---|
| Eingabe: Hildesheim | | | |
| alternative Adressbestandteile (Übereinstimmungswert) | Längenparameter | Verknüpfung mit Gewichtungsfaktor | Gewichtungsfaktor |
| **Hildesheirn (100)** | **10** | **Ja** | **1** |
| Hillesheim (95) | 9 | Nein | 1 |
| Nersheim (81) | 8 | Nein | 1 |

**Tabelle 5:**

| Eingabebestandteil: Stadt | | | |
|---|---|---|---|
| Eingabe: Hildesheim | | | |
| alternative Adressbestandteile (Überein stimmungswert) | Längenparameter | Verknüpfung mit Gewichtungsfaktor | Gewichtungsfaktor |
| **Torweg (100)** | **6** | **Ja** | **0,6** |
| Ahornweg (95) | 8 | Nein | 0,6 |
| Turmweg (90) | 7 | Nein | 0,6 |

**Tabelle 6:**

| Kombination der Adressbestandteile: | | | |
|---|---|---|---|
| Stadt | Gewichteter Übereinstimmungswert | Straße | Gewichteter Übereinstimmungswert |
| Hildesheim | 100*1=100 | Turmweg | 90*0,6=54 |
| Hillesheim | 95*1=95 | Ahornweg | 95*0,6=57 |
| Nersheim | 81*1=81 | Torweg | 100*0,6=60 |

**Tabelle 7:**

| Existierende Adressbestandteilskombination | Dynamisch Gewichtete Kombinationsbewertung |
|---|---|
| Hildesheim, Turmweg | 154 |
| Hillesheim, Ahornweg | 152 |
| Nersheim, Torweg | 141 |

**Tabelle 8:**

| Existierende Adressbestandteilskombination | Statisch Gewichtete Kombinationsbewertung |
|---|---|
| Hillesheim, Ahornweg | 95+2*95=285 |
| Nersheim, Torweg | 81+2*100=281 |
| **Hildesheim, Turmweg** | **100+2*90=280** |

## Patentansprüche

1. Verfahren zum Betrieb eines Navigationssystems mit einer Routenberechnungseinheit und einer Aufnahmeeinrichtung, an der eine akustische Adresseingabe, die aus mehreren Adressbestandteilen besteht, aufgenommen werden kann, wobei die Eingabebestandteile der Adresse mit einem Spracherkennungsmodul analysiert werden, und wobei abhängig vom Ergebnis der Spracherkennungsanalyse zumindest ein geographischer Ort, der durch eine Adresse mit mehreren Adressbestandteilen definiert ist, aus einer Datenbank zur Weiterverarbeitung ausgewählt wird,
**dadurch gekennzeichnet,**
**dass**
a) für einen ersten Eingabebestandteil eine Spracherkennungsanalyse durchgeführt wird, wobei abhängig vom Ergebnis der Spracherkennungsanalyse zum ersten Eingabebestandteil mehrere mögliche erste Adressbestandteile aus der Datenbank ausgewählt werden, und wobei zu jedem dieser alternativen ersten Adressbestandteile ein Übereinstimmungswert zur Qualifizierung der akustischen Übereinstimmung mit dem ersten Eingabebestandteil ermittelt wird;
b) für zumindest einen zweiten Eingabebestandteil eine Spracherkennungsanalyse durchgeführt wird, wobei abhängig vom Ergebnis der Spracherkennungsanalyse zum zweiten Eingabebestandteil mehrere mögliche zweite Adressbestandteile aus der Datenbank ausgewählt werden, und wobei zu jedem dieser alternativen zweiten Adressbestandteile ein Übereinstimmungswert zur Qualifizierung der akustischen Übereinstimmung mit dem zweiten Eingabebestandteil ermittelt wird;
c) für unterschiedliche Kombinationen aus jeweils verschiedenen ersten Adressbestandteilen und zweiten Adressbestandteilen eine gewichtete Kombinationsbewertung ermittelt wird, die auf den mit einem für den ersten bzw. zweiten Adressbestsandteil ermittelten Gewichtungsfaktor gewichteten Übereinstimmungswerten beruht.

2. Verfahren nach Anspruch 1,
**dadurch gekennzeichnet,**
**dass** der Gewichtungsfaktor ein Maß dafür darstellt, ob der Eingabebestandteil von der Spracherkennungsanalyse korrekt erkannt werden kann.

3. Verfahren nach Anspruch 1 oder 2,
**dadurch gekennzeichnet,**
**dass** jedem der alternativen Adressbestandteile, die bei der Spracherkennungsanalyse eines Eingabebestandsteils ausgewählt werden, ein Längenparameter zugewiesen werden kann, der in die Berechnung der Gewichtungsfaktoren Eingang finden kann.

4. Verfahren nach Anspruch 3,
**dadurch gekennzeichnet,**
**dass** die Definition des Längenparameters von den Spracheinstellungen des Navigationssystems und/oder der Sprache der akustischen Adresseingabe abhängt.

5. Verfahren nach Anspruch 3 oder 4,
**dadurch gekennzeichnet,**
**dass** einem Adressbestandteil die Anzahl der Zeichen des Adressbestandteils als Längenparameter zugewiesen wird.

6. Verfahren nach Anspruch 3 oder 4,
**dadurch gekennzeichnet,**
**dass** einem Adressbestandteil die Anzahl der Zeichen der phonetischen Transkription des Adressbestandteils als Längenparameter zugewiesen wird.

7. Verfahren nach einem der Ansprüche 1 bis 6,
**dadurch gekennzeichnet,**
**dass** für unterschiedliche Kombinationen aus jeweils verschiedenen ersten Adressbestandteilen und zweiten Adressbestandteilen jeweils unterschiedliche Gewichtungsfaktoren für den ersten Adressbestandteil und den zweiten Adressbestandteil erstellt werden, wobei die Gewichtungsfaktoren von den Längenparametern der Adressbestandteile abhängig sind.

8. Verfahren nach einem der Ansprüche 1 bis 6,
**dadurch gekennzeichnet,**
**dass** für einen akustischen Adresseingabevorgang lediglich ein Gewichtungsfaktor für alle alternativen Adressbestandteile des ersten Eingabebestandteils und ein Gewichtungsfaktor für alle alternativen Adressbestandteil des zweiten Eingabebestandteils erstellt wird.

9. Verfahren nach Anspruch 8,
**dadurch gekennzeichnet,**
**dass** der Gewichtungsfaktor aller alternativen Adressbestandteile des ersten bzw. zweiten Eingabebestandteils von dem Zeitintervall abhängt, welches zur Aufzeichnung des ersten bzw. zweiten Eingabebestandteils benötigt wird.

10. Verfahren nach Anspruch 8,
**dadurch gekennzeichnet,**
**dass** der Gewichtungsfaktor aller alternativen Adressbestandteile des ersten bzw. zweiten Eingabebestandteils von dem Längenparameter des Adressbestandteils abhängt, welcher den höchsten Überseinstimmungswert mit dem ersten bzw. zweiten Eingabebestandteil aufweist.

11. Verfahren nach Anspruch 8,
**dadurch gekennzeichnet,**
**dass** der Gewichtungsfaktor aller alternativen Adressbestandteile des ersten bzw. zweiten Eingabebestandteils vom arithmetischen Mittelwert der Längenparameter oder vom Median der Längenparameter der ersten bzw. zweiten Adressbestandteile abhängt.

12. Verfahren nach einem der Ansprüche 1 bis 11,
**dadurch gekennzeichnet,**
**dass** die Kombination von Adressbestandteilen mit der besten gewichteten Kombinationsbewertung zur Weiterverarbeitung, insbesondere als Zieleingabe für einen Routenberechnungsprozess, ausgewählt wird.

13. Verfahren nach einem der Ansprüche 1 bis 12,
**dadurch gekennzeichnet,**
**dass** eine Liste aus mehreren Kombinationen von Adressbestandteilen, die die relativ besten gewichteten Kombinationsbewertungen aufweisen, zur Weiterverarbeitung ausgewählt wird.

14. Verfahren nach Anspruch 13,
**dadurch gekennzeichnet,**
**dass** die Liste aus mehreren Kombinationen von Adressbestandteilen, die die relativ besten gewichteten Kombinationsbewertungen aufweisen, zur Auswahl einer Adresse für den Benutzer ausgegeben, insbesondere angezeigt, wird.

15. Verfahren nach einem der Ansprüche 1 bis 14,
**dadurch gekennzeichnet,**
**dass** es sich bei dem ersten Adressbestandteil um eine Stadt und beim zweiten Adressbestandteil um eine Straße handelt.
